# EUROPÄISCHE PATENTSCHRIFT

(11) **EP 0 597 418 B1**
(45) Veröffentlichungstag und Bekanntmachung des Hinweises auf die Patenterteilung: **02.09.1998**
(21) Anmeldenummer: 93118060.8
(22) Anmeldetag: 08.11.1993
(51) Int. Cl.: B64C 1/14

(54) **Elektronische Steuerung zur Realisierung der Kinematik für eine Flugzeugtür**
Electronic control for the operating mechanism of an aircraft door
Commande électronique pour l'actionnement de la cinématique d'une porte d'avion

(30) Priorität: 13.11.1992 US 975785
(43) Veröffentlichungstag der Anmeldung: 18.05.1994
(73) Patentinhaber: Daimler-Benz Aerospace Airbus Gesellschaft mit beschränkter Haftung, 21129 Hamburg (DE)
(72) Erfinder: Herrmann, Dieter, D-22844 Norderstedt (DE); Kallies, Günter, D-22523 Hamburg (DE)
(74) Vertreter: Hansmann, Dierk, Dipl.-Ing.

(56) Entgegenhaltungen:
- EP-A- 0 321 994
- EP-A- 0 465 785
- DE-C- 4 104 801

## Beschreibung

Die Erfindung bezieht sich auf ein Flugzeugüberwachungssystem in Kombination mit einer Flugzeugtür und mit einer elektronischen Steuerung zur Realisierung der Kinematik der Flugzeugtür. Mit ihr ist das Schließen und Öffnen der Flugzeugtür, deren Komponenten elektrisch zu betätigen sind, elektronisch steuerbar.

Flugzeugtüren unterliegen verschiedenen Anforderungen, die von ihnen im Flugbetrieb als auch im Notfall (Haverie- und Katastrophenfall eines Flugzeuges) zu erfüllen sind. Einerseits müssen die Türen während des Flugzeugbetriebes dicht verriegelt sein und auch die Situation der Aufnahme aller sie angreifenden Lasten realisieren. Andererseits ist es erforderlich, daß diese Flugzeugtüren sich im Notfall schnell und einfach öffnen lassen. Damit alle Lasten aufgenommen werden können, befinden sich die Flugzeugtüren im geschlossenen Zustand in einer formschließenden Stellung zur Rumpfstruktur des Flugzeugs und sind zusätzlich verriegelt. Die Türen von Flugzeugen mit einer Druckkabine müssen außerdem in der Lage sein, dem während des Fluges herrschenden Kabineninnendruck standzuhalten. Im Zusammenhang mit Passagierflugzeugen muß zusätzlich die Forderung erfüllt sein, daß jede Flugzeugtür mit einer Notrutsche versehen ist, die im Notfall durch die Betätigungselemente der Tür selbst aktiviert und entfaltet wird.

Um eine formschließende Verbindung zwischen der Tür und der Rumpfstruktur des Flugzeugs herzustellen und um die aus dem Kabineninnendruck resultierenden Kräfte zu übertragen werden zwei herkömmliche Türverschlußprinzipien verwendet. Bei einer nach dem Kontaktprinzip ausgebildeten Flugzeugtür wird letztere mit dem Türrahmen, der in der Rumpfstruktur des Flugzeugs sitzt, in eine dichtschließende Verbindung gebracht. Eine nach dem Kniehebel - Prinzip ausgebildete Flugzeugtür wird durch Kniehebel dicht verschlossen.

Flugzeugtüren, die nach dem Kontaktprinzip konstruiert sind, enthalten entlang ihrer seitlichen Ränder oder Kanten Kontaktvorrichtungen. Beim Schließen werden solche Türen erst in die Rumpfstruktur hineingeschwenkt und dann abgesenkt. Das Absenken der geschlossenen Tür um eine bestimmte Distanz bewirkt, daß die Vorrichtungskomponenten der Tür die entsprechenden Kontaktvorrichtungen im Rumpf berühren und an ihnen anliegen.

Das Zusammenwirken dieser Komponenten sorgt dafür, daß alle an der Flugzeugtür angreifenden nach außen gerichteten Kräfte sicher aufgenommen werden.

Flugzeugtüren, die man nach dem Kniehebel - Prinzip konstruiert, sind entlang den seitlichen Kanten mit drehbaren Kniehebeln ausgerüstet, die sich während der Schließbewegung der Flugzeugtür entlang den Türkanten nach außen bewegen und in entsprechenden Vertiefungen im Türrahmen einrasten. Zum Verschließen der Flugzeugtür werden die Kniehebel in den Vertiefungen gedreht, so daß sie - statt längs zur Türkante - dann quer liegen. Der erforderliche Formschluß mit der Rumpfstruktur des Flugzeugs wird somit erzielt.

Bei beiden Flugzeugtürtypen werden die einzelnen Betätigungsschritte wie Schließen, Verriegeln, Aktivieren der Notrutsche und die jeweils umgekehrten Vorgänge von Hand durchgeführt. Die Lösung der US 4,720,065 enthält ein Türbetätigungssystem, bei dem sich die Tür nach dem obengenannten Kontaktprinzip schließt. Die entsprechend dieser Lösung innerhalb der Tür angebrachte Betätigungsvorrichtung ist so gebaut, daß die über einen (an der Seite der Tür angebrachten und in das Kabineninnere gerichteten) Handhebel ausgeführte Betätigungsbewegung auf eine Anhebewelle, eine Verschlußklappe und eine Verriegelungsvorrichtung der Notrutsche übertragen wird. Die Anhebewelle stellt sicher, daß sich die Tür beim Öffnen anhebt und beim Schließen absenkt. Der Betrieb der besagten Tür wird nachfolgend anhand von Beispielen beschrieben, und zwar unter Bezugnahme auf die Reihenfolge der Arbeitsgänge, die beim Anheben und Absenken der Tür anfallen. Die Anhebewelle umfaßt Kurbeln, die seitlich mit den beiden Enden der Anhebewelle verbunden ist. Diese Kurbeln greifen mit ihrer Kurbelwange in entsprechende Führungsschienen, wenn die Tür in eine Schließposition geschwenkt wird. Zum Absenken der Tür wird die Anhebewelle mit dem Handbedienhebel der Tür so gedreht, daß sich die beiden Kurbelwangen auf einer entsprechenden und zur Tür kreisförmig verlaufenden Bahn nach oben bewegen, wobei sich die Kurbelwangen gegen die Führungsschienen stützen, die Tür sich nach unten absenkt und dabei die Reibung der Türdichtung überwindet. Zum Öffnen der Tür muß letztere zuerst durch das Drehen der Anhebewelle in die entgegengesetzte Richtung angehoben werden. Es ist wünschenswert, die insbesondere zum Anheben der Tür benötigte Kraft zu verringern, um die physische Stärke auf ein Mindestmaß zu begrenzen, die eine Person zum Betätigen der Tür aufzubringen hat. Zu diesem Zweck ist im Zusammenwirken mit dem Anhebevorgang eine Gewichtskompensationsvorrichtung vorgesehen. Die Kompensationsvorrichtung umfaßt eine Feder, die während des Absenkens der Tür gespannt ist und vor dem Öffnen der Tür hilft, sie anzuheben.

Die für die Durchführung der eben beschriebenen Mehrfachfünktionen erforderliche Vorrichtung ist sehr komplex und umfaßt zahlreiche Lager, Wellen, Hebel, Zapfen und Drehgelenke sowie einen Nockenantrieb. Die Situation wird noch schwieriger, wenn zumindest einige der Komponenten doppelt vorhanden sein müssen, um sogenannte " Fail - safe " - Anforderungen (Ausfallsicherheitsanforderungen) zu erfüllen. Aufgrund der hohen Zahl mechanisch wirkender Komponenten und Elemente sind die Fertigungskosten für solche Türen relativ hoch. Des weiteren wirkt nachteilig, daß besonders im Zusammenhang mit größeren Passagiertüren für die Betätigung dieser Türen relativ große körperliche Kräfte zum Anheben erforderlich sind, auch wenn eine Kompensationsvorrichtung mit einem deutlichen mechanischen Vorteil zur Verfügung steht.

Diese vorbeschriebenen Tatsachen, die sich auf Flugzeugtüren beziehen, die nach dem Kontaktprinzip gebaut sind, gelten im wesentlichen auch für Türen die für den Betrieb nach dem Kniehebel - Prinzip gebaut sind. Obwohl das Anheben und Absenken bei den nach diesem Prinzip betätigten Türen keine Rolle spielt, ist immer noch ein beträchtlicher technischer und kostenmäßiger Aufwand im Hinblick darauf nötig, daß auch bei mit Kniehebeln verriegelte Türen eine hohe Zahl von mechanischen Strukturkomponenten erforderlich ist. Ein weiterer Nachteil des Kniehebel - Prinzips besteht darin, daß die Kniehebel nur dann in den entsprechenden Vertiefungen einrasten, wenn die Tür genau positioniert ist. Ohne diese genaue Positionierung können die Kniehebel nicht betätigt werden. Die erforderliche Präzisionsbauweise erhöht ebenfalls den Aufwand und die Kosten für die Fertigung solcher Türen auf eine Art und Weise, die eine fehlerfreie Funktion ermöglicht.

Angesichts dieser Feststellungen wird klar, daß für das Entriegeln und Öffnen sowie für das Schließen und Verriegeln einer Flugzeugtür eine Vielzahl von verschiedenen Bewegungsabläufen benötig wird. Herkömmlicherweise werden diese Bewegungsabläufe mechanisch angetrieben und koordiniert. Unabhängig vom Antriebs- oder Betätigungssystem für eine Flugzeugtür sind Verriegelungshaken, Verriegelungsnocken und Türklappen erforderlich, die von elektrisch bzw. pneumatisch betriebenen Antriebswellen oder einem Betätigungsgestänge ordnungsgemäß bewegt werden müssen; - und diese Antriebe müssen steuerbar sein.

Die Europäische Patentveröffentlichung EP 0.321.994 beschreibt ein Verriegelungssystem für eine Flugzeugausstiegstür, bei dem die Ausstiegstür in Abhängigkeit von drei unterschiedlichen Eingaben in ein Logiksystem automatisch verriegelt wird. Die Eingangssignale stammen von Beschleunigungs-, Druck- und Bewegungssensoren.
Die Signalausgaben dieser Sensoren werden in einer logischen Schaltung so verwendet, daß jeweils zwei dieser Signaleingaben in die Schaltung bestimmen können, ob die Verriegelung in der Passagierkabinentür aktiviert ist oder nicht. Eine Öffnungs- und Schließprogramm - Reihenfolge gehört bei diesem Steuerungstyp nicht dazu.

Die EP-A-0 465 785 offenbart eine Lösung, nach der die Kinematik einer nach dem Anlageprinzip ausgebildeten Flugzeugtür mittels programmgesteuerter Elektromotoren realisiert wird. Danach ist vorgesehen, daß die unterschiedlichen Türfunktionen (-bewegungen) mittels der Elektromotoren, die einzeln ansteuerbar sind, mechanisch auf die betreffenden Flugzeugtürkomponenten übertragen werden. Demnach sollen die erforderlichen Bewegungen zum Öffnen und Schließen der Flugzeugtur und umgekehrt aufgrund abgespeicherter Programme koordiniert ablaufen. Es wird dahingehend aber kein Vorschlag unterbreitet, aus dem man das Konzept einer elektronischen Steuerung zur Realisierung der Kinematik mittels der mit Elektromotoren ausgestatteten Flugzeugtür entnehmen kann. Es wird kein Hinweis unterbreitet, aus dem entnommen werden kann, welche schaltungsmäßigen Verknüpfungen mit den verschiedenen Einrichtungen und Einheiten eines Flugzeuges aufzubauen wären, um die Komponenten der Flugzeugtür mit entsprechenden elektrischen Mitteln zu bedienen, deren Ansteuerung und Überwachung nach einem bestimmten Programmablauf und in geeigneter Art und Weise elektronisch geschehen soll. Der Oberbegriff des Anspruchs 1 basiert auf diesem Dokument.

Bei den erwähnten Lösungen, die das Öffnen und Schließen oder Entriegeln und Verriegeln einer Flugzeugtür realisieren, sind zusammengefaßt eine Vielzahl von unterschiedlichen Bewegungsabläufen erforderlich, die üblicherweise auf mechanischem Wege durchgeführt und koordiniert werden. Ungeachtet der Wahl des entsprechenden Betätigungssystems für eine Flugzeugtür, wie beispielsweise eine pneumatische oder elektrische - pneumatische oder elektrische Betätigung, wären dabei Verriegelungshaken, Verriegelungsnocken oder Verkürzungsklappen, die durch Drehwellen oder Betätigungsgestänge miteinander verbunden sind, kontrolliert zu bewegen.

Die verschiedenen Bewegungsabläufe derartiger Lösungen werden durch elektrische Antriebe ausgeführt. Die Überwachung und Koordinierung der Steuerung dieser Antriebe erfolgt (bisher) bekanntermaßen mittels traditioneller kompatibeler Steuerungstechnik, wobei bekanntermaßen Elektromotoren über Relais angesteuert werden. Eine besonders präzise (elektronische) Steuerung der Kinematik für Flugzeugtüren, die
- die Betätigung und Funktion dieser Flugzeugtüren stärker automatisiert und auf manuellen Aufwand bei der Flugzeugtürbetätigung verzichtet, damit das Bedienpersonal nicht übermäßige körperliche Kraft aufzuwenden braucht;
- das Schließen und Öffnen einer Flugzeugtür, deren Komponenten elektrisch betätigt werden, elektronisch steuert, und zwar nach einem Programm, das im Speicher einer zentralen (Verarbeitungs- und Steuer-) Einheit gespeichert ist;
- unter Normal- und Notfallbedingungen eine ordnungsgemäße Betätigung der Flugzeugtür sicherstellt, wobei alle Komponenten der Flugzeugtür unter normalen Betriebs- und unter Notfallbedingungen elektrisch zu betätigen sind;
- den Bedienaufwand des Bedienpersonals bei der Flugzeugtürbetätigung auf ein Mindestmaß reduziert und effizient vereinfacht;
- die Druckhöhen der Druckbehälter überwacht, um eine Notrutsche und eine Kolbenzylindervorrichtung für eine Türöffnung im Notfall betätigen zu können, sowie die überwachten Drücke auf einer Anzeigetafel des bordeigenen ECAM-Systems (Electronic Centralized Aircraft Monitoring System) anzeigt;
- sicherstellt, daß sich die Notrutsche in " gesichertem " Zustand befindet, bevor irgendwelche Entriegelungsschritte durchgeführt werden;
- eine deutlich geringere Zahl von mechanisch wirkenden Türelementen erfordert, wodurch sich die Fertigungskosten einer Flugzeugtür reduzieren, und die den Sicherheitsanforderungen solcher Flugzeugtüren entspricht
ist demnach nicht bekannt.

Demzufolge liegt der Erfindung die Aufgabe zugrunde, ein Flugzeugüberwachungssystem in Kombination mit einer Flugzeugtür und mit einer elektronischen Steuerung zur Realisierung der Kinematik der Flugzeugtur zu realisieren, mit der eine programmgesteuerte Betätigung der Flugzeugtürkomponenten im Normalbetrieb und unter Notfallbedingungen gewährleistet wird. Die Steuerung der elektrisch angetriebenen Komponenten der Flugzeugtür soll elektronisch erfolgen, wobei die Kinematik der Flugzeugtür überwacht und koordiniert wird. Der manuelle Aufwand des Bedienpersonals bei der Türbetätigung ist wesentlich abzubauen. Die Betätigung der elektronischen Steuerung ist auf ein Mindestmaß an Bedienfunktionen zu beschränken und effizient zu vereinfachen. Sie soll eine deutlich geringe Zahl von Flugzeugtürkomponenten erfordern, wodurch die Fertigungskosten der Flugzeugtür reduziert werden.

Diese Aufgabe wird bei der gattungsgemäßen elektronischen Steuerung durch die kennzeichnenden Merkmale des Anspruches 1 gelöst. Vorteilhafte Ausgestaltungen der Erfindung sind in den Ansprüchen 2 bis 6 angegeben.

Die durch die Erfindung erreichten Vorteile sind wesentlich mit darin zu sehen, daß die elektronische Steuerung sich ohne großen Aufwand realisieren läßt und zuverlässig ⁴¹ arbeitet. Die vom Bedienpersonal (Flugzeugbegleitpersonal) zu bedienenden elektrischen Elemente zur Betätigung der Flugzeugtür sind überschaubar angeordnet und lassen sich reaktionsschnell erfassen. Mit ihr wird die ordnungsgemäße ⁴² Betätigung der Flugzeugtürkomponenten unter Normal- und Notfallbedingungen sichergestellt. Der manuelle ³⁷ Aufwand des Bedienpersonals bei der Flugzeugtürbetätigung beschränkt sich auf ein Mindestmaß von Bedienhandlungen an inner- oder außerhalb ⁴³ des Flugzeuges positionierten Bedieneinheiten ⁴⁴. Die elektronische Steuerung erfordert eine deutlich geringe Zahl von elektrisch angetriebenen Flugzeugtürkomponenten ⁴⁵, die elektronisch gesteuert werden ^{45a}, wodurch die Fertigungskosten der Flugzeugtür reduziert werden.

Als weiterhin vorteilhaft erweist sich, daß die Benutzung je einer Leitung durch die beiden Drucksensoren von einem gemeinsamen Anschluß (an einen Knotenpunkt) zur Mikroprozessoreneinheit die Ersparnis zusätzlichen Leitungsmateriales gewährleistet , da eine gleichzeitige Prüfung der Druckverhältnisse der Druckspeicher für den pneumatischen Öffnungszylinder bzw. für die Notrutsche nicht vorgesehen ist.

Die zusätzliche Einrüstung eines Schaltelementes, vorzugsweise durch einen elektrischen Schalter realisiert, an einer Schnittstelle, die jeweils den Sensoren leitungsmäßig zugeordnet ist, gestattet die wahlweise Zu- oder Abschaltung der betreffenden Steuerleitung. Die unterschiedliche Gestaltung der beiden Bedieneinheiten mittels der Betätigungs- und Anzeigeelemente und deren Installation bzw. Positionierung inner- und außerhalb des Flugzeuges wirkt sich ebenfalls vorteilhaft aus. Danach genügt es, mit der zweiten Bedieneinheit, die sich außerhalb des Flugzeuges und in der unmittelbaren Nähe der Flugzeugtür befindet, nur die Öffnungs- oder Schließfunktion derselben zu erledigen.
Mit der ersten Bedieneinheit werden zusätzliche Funktionen bzw. Anzeigen realisierbar, auf die das Bedienpersonal innerhalb des Flugzeuges nicht verzichten darf. Die digitale Ansteuerung der Elektromotoren begründet sich vorteilhafterweise auf eine unbedingt erforderliche fehlerfreie Übertrag- und Verarbeitbarkeit digitaler Signale, wobei eine leichte Speicherbarkeit des Steuerprogrammes in Form digitaler Werte sowie die leichte Änderung des Regelalgorithmus bei programmierbaren digitalen Regeleinrichtungen ebenfalls einen Zusatzvorteil darstellt: auf diese genannten Vorteile verzichtet man im Flugzeugbau ungern. Die vorteilhafte Aufteilung und Betreibung von mehreren Elektromotorengruppen liegt in der systemzugeordneten Technologie des Betreibens der Tür begründet, wobei zu einer Gruppe mindestens ein Elektromotor im Sinne der Arbeitsanweisung zählt und so zu verstehen ist. Die Ausrüstung der Tür mit Gleich- und / oder Wechselstromkleinstmotoren ist mit dem Vorteil einer ausreichenden Leistungsabgabe zum Betreiben der Tür verbunden. Der vorteilhafte Einsatz von vorzugsweise Schrittmotoren ist in der gewollten Ausführung schrittweiser Drehbewegungen und damit auch der Tür zu erkennen. In diesem Zusammenhang nutzt die erfinderische Lösung in Verbindung mit der genannten digitalen Ansteuerung der Elektromotoren den Vorteil des Einsatzes von Schrittmotoren als Stellmotoren in der digitalen Steuerungstechnik. Der Vorteil der Nutzung des zentralen elektronischen Flugzeugüberwachungssystems ist in der Sammlung, der Bereitstellung, der Verknüpfung und der Darstellung von Zustandsdaten, hier über den geöffneten oder geschlossenen Zustand der Flugzeugtür, zu erblicken, wobei die mit dem Zustand korrelierenden und entsprechend gewandelten digitalen Signale auf dem im Cockpit des Flugzeuges installierten Bildschirmsystem visuell dargestellt werden.

Die Erfindung ist anhand der Zeichnungen dargestellt und in einem Ausführungsbeispiel näher beschrieben. Es zeigen
- Fig.1: die Übersichtsdarstellung einer nach dem Anlageprinzip ausgebildeten Flugzeugtür;
- Fig.2: das Blockschaltbild der elektronischen Steuerung zur Realisierung der Kinematik für die Flugzeugtür nach Fig. 1;
- Fig.3: die Darstellung des zeitlichen Ablaufes beim Entriegeln und Öffnen der Flugzeugtür nach Fig. 1 im Normalfall;
- Fig.4: die Darstellung des zeitlichen Ablaufes beim Entriegeln und Öffnen der Flugzeugtür nach Fig. 1 im Notfall;
- Fig.5: den Programmablauf für die Stellmotoren des Antriebssystems der Flugzeugtür.

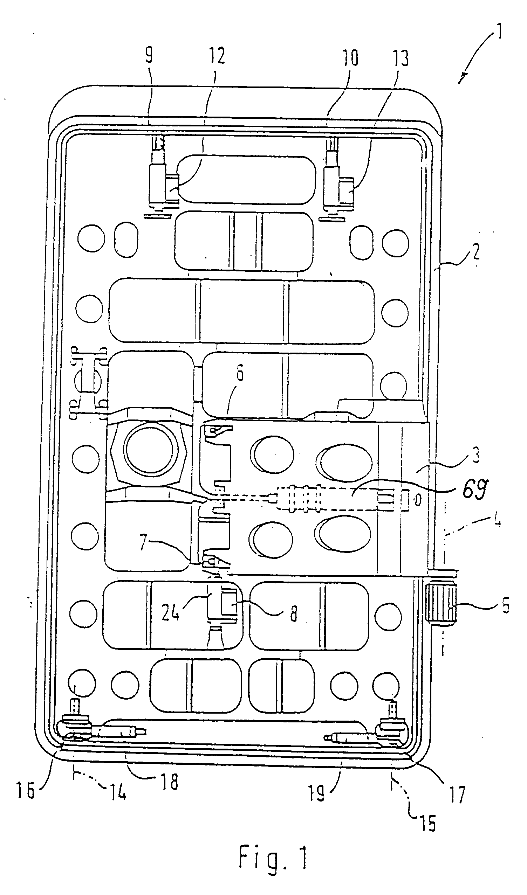

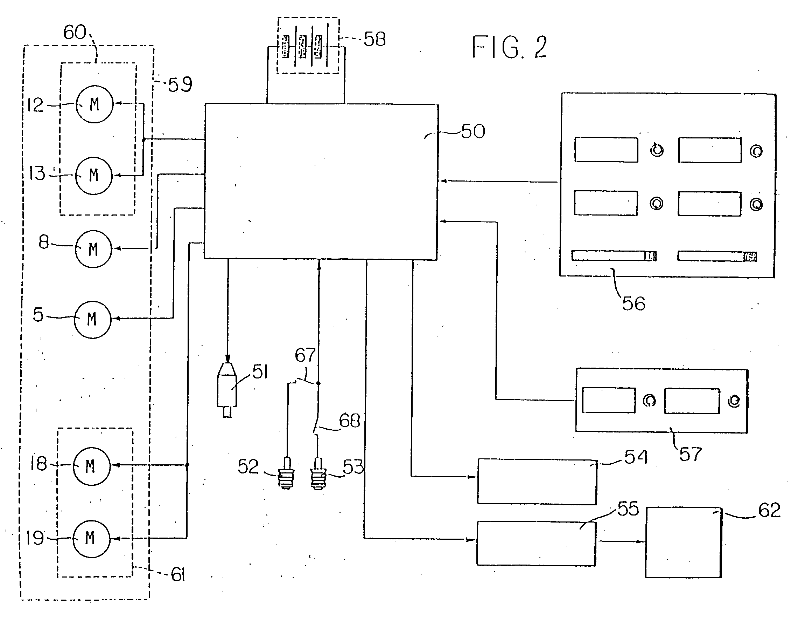

Anhand eines Ausführungsbeispieles soll das Flugzeugüberwachungssystem in Kombination mit einer Flugzeugfür 1 und mit einer elektronischen Steuerung zur Realisierung der Kinematik der Flugzeugtür 1 näher erläutert werden. In der Fig. 1 ist die Übersichtsdarstellung der nach dem Anlageprinzip ausgebildeten Flugzeugfür 1 dargestellt. Diese Flugzeugtür 1 wird in geschlossener und verriegelter Position gezeigt. Aus der Darstellung läßt sich die Anordnung aller Elektromotoren 5, 8, 12, 13, 18, 19, die ein elektrisches Antriebssystem 59 bilden, in der Flugzeugtür 1 erkennen, die gemäß dem Blockschaltbild der elektronischen Steuerung nach Fig.2 von ihr digital angesteuert werden. Die elektronischen Steuerung setzt sich im wesentlichen aus der schaltungsmäßigen Verbindung nachfolgender Elemente: einer Mikroprozessoreneinheit 50, einer ersten Bedieneinheit 56, einer zweiten Bedieneinheit 57, einer Elektromagnet-Einheit 51, einem ersten Drucksensor 52, einem zweiten Drucksensor 53, einem Bodenventil 54, einem Computerkontrollsystem 55, einer Gleichstromquelle 58, einer Cockpitanzeige 62 im Flugzeug - Cockpit und einem Notrutschenbetriebssystem 63 zusammen. Die Mikroprozessoreneinheit 50 ist dabei mit den ihr nachfolgend genannten Elementen über Signal- oder Steuerleitungen verbunden. Letztere steuert das mit ihr verbundene elektrische Antriebssystem 59.
Die Mikroprozessoreneinheit 50 weist einen elektronischen Datenspeicher mit wenigstens einem abgespeicherten und die unterschiedlichen Funktionen der Kinematik der Flugzeugtür 1 überwachenden und koordinierenden Programm auf, mit dem die Reihenfolge der Schritte des von ihr angesteuerten Antriebssystems 59 zur Realisierung der Kinematik der Flugzeugtür 1 oder zum Betätigen der Notrutschenhebelmechanik gewährleistet wird.

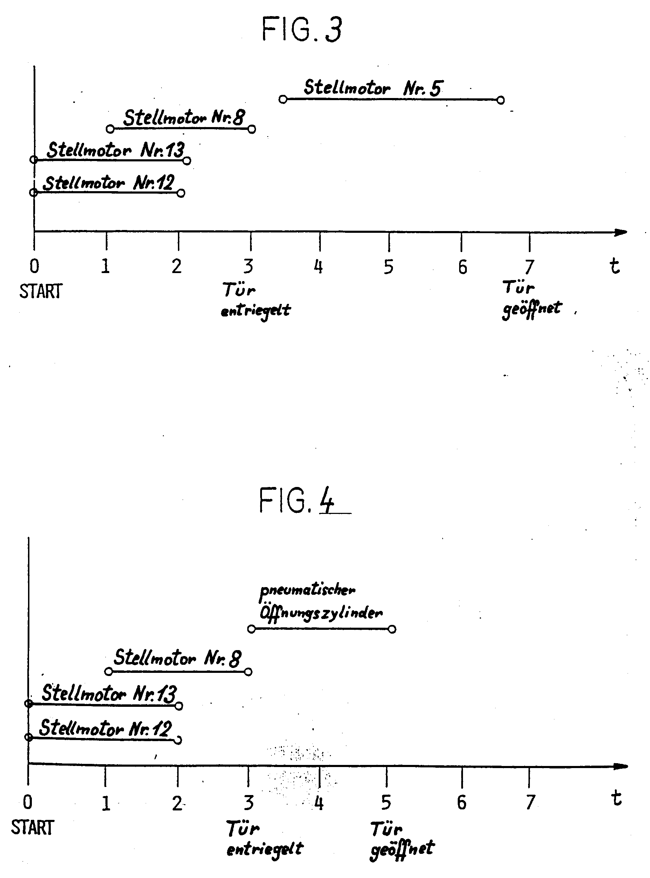

Ein Vergleich mit den Figuren 3 bis 5 gibt Auskunft über den zeitlichen Ablauf der Schritte.

Die Notrutschenhebelmechanik setzt dabei die Schlitten der Notrutschenschiene (der Notrutsche) in die Stellungen scharf oder unscharf.

Der erste Drucksensor 52 ist entweder direkt mit der Mikroprozessoreneinheit 50 verbunden oder von einem auf der direkten Leitung zwischen der Mikroprozessoreneinheit 50 und dem zweiten Drucksensor 53 sich befindenden Knotenpunkt abgezweigt. Zur Unterbrechung der knotenpunktmäßig zusammengeführten Leitungen, die die Drucksensoren 52, 53 mit der Mikroprozessoreneinheit 50 verbindet, sind diese durch jeweils ein Schaltelement 67, 68, vorzugsweise einem elektrischer Schalter, abschaltbar; um die von den Sensoren 52, 53 abgegebenen Signale zu unterscheiden.

Das Computerkontrollsystem 55, das mit der Mikroprozessoreneinheit 50 direkt in Verbindung steht, ist ausgangsseitig mit der im Flugzeug - Cockpit befindlichen Cockpitanzeige 62 (Display) verbunden. Es ist mit Bestandteil eines zentralen elektronischen Flugzeugüberwachungssystem des Flugzeuges und überwacht den aktuellen technischen Zustand aller an Bord (des Flugzeuges) befindlichen Betriebsmittel - einschließlich den geöffneten oder geschlossenen Zustandes der Flugzeugtür 1, der auf der erwähnten Cockpitanzeige 62 visuell darstellt wird. Das Computerkontrollsystem 55 informiert die Mikroprozessoreneinheit 50 über den aktuellen technischen Zustand der Betriebsmittel mittels transformierter physikalischer Zustände in digitalisierte Informationswerte vor und während der Start- und Landephase sowie während des Reisefluges.

Eine direkt an die Mikroprozessoreneinheit 50 angeschlossene Stromleitung verbindet diese mit der Gleichstromquelle 58, beispielsweise mit einer Batterie oder einem Akkumulator.
Bei einem (betriebsmäßigen) Stromausfall (im Notfall) ermöglicht die (als Reserve eingesetzte) Gleichstromquelle 58 durch ihre externe Stromversorgung das Entriegeln der Flugzeugtür 1 auch bei Ausfall der Bordspannung. Gleichzeitig ist dann eine Änderung im Programmablauf des elektronischen Datenspeichers der Mikroprozessoreneinheit 50 vorgesehen. Das Aufschwenken der Flugzeugtür 1 erfolgt dann nicht durch den ersten Elektromotor 5 sondern durch einen pneumatischen (Not-) Öffnungszylinder 69.

Dadurch wird einerseits sichergestellt, daß die Flugzeugtür 1 auch unter extremen Bedingungen der eingangs genannten Art, beispielsweise bei vorhandener Schräglage oder Seitenwind, sicher geöffnet werden kann, und daß andererseits die die Batteriekapazität klein gehalten werden kann; da zum Entriegeln der Flugzeugtür 1 lediglich die Hubspindelantriebe 8, 12, 13 zu betätigen sind.

An die Mikroprozessoreneinheit 50 ist das elektrische Antriebssystem 59 der Flugzeugtür 1 mittels Signal- bzw. Steuerleitungen angeschlossen. Dieses elektrische Antriebssystem 59 setzt sich beispielgemäß aus den zwei Elektromotoren 5, 8 und den zwei Elektromotorengruppen 60, 61 zusammen.

Ein erster und ein zweiter Elektromotor 5, 8 sind leitungsmäßig direkt mit der Mikroprozessoreneinheit 50 verbunden. Eine erste Elektromotorengruppe 60, zu der ein dritter und ein vierter Elektromotor 12, 13 gehört, und eine zweite Elektromotorengruppe 61, zu der ein fünfter und ein sechster Elektromotor 12, 13 gehört, wird jeweils mittels einer separaten Signal- bzw. Steuerleitung direkt auf die Mikroprozessoreneinheit 50 geschalten. Diese separate Signal- bzw. Steuerleitung führt jeweils zu einem Knotenpunkt, an dem jeweils die zwei Elektromotoren 12, 13 bzw. 18, 19 der ersten oder zweiten Elektromotorengruppe 60, 61 angeschlossen sind.

Die Elektromagnet-Einheit 51 besteht hauptsächlich aus einem Elektromagneten. Sie realisiert die Aktivierung des (in Fig.1 mit dargestellten) pneumatischen Öffnungszylinders 69 für die Notauslösung der Flugzeugtür 1. Dabei betätigt der Elektromagnet der Elektromagnet-Einheit 51 ein (in Fig. 2 nicht dargestelltes) Ventil, womit der von einem (nicht gezeigten) Druckluftspeicher gespeiste Öffnungszylinder 69 bezüglich der Notauslösung aktiviert bzw. entaktiviert wird. Der dazu erforderliche Impuls wird von der Mikroprozessoreneinheit 50 bereitgestellt.

Die beiden Drucksensoren 52, 53 überwachen die Druckluftverhältnisse des vorgenannten Druckluftspeichers, indem sie den Füllstatus der (nicht gezeigten) Druckluftbehälter feststellen. Der erste Drucksensor 52 ist dem Öffnungszylinder 69 und der zweite Drucksensor 53 ist der Notrutsche zugeordnet. Beide Drucksensoren 52, 53 signalisieren der Mikroprozessoreneinheit 50 die aktuellen Druckluftverhältnisse.

Das Bodenventil 54, das direkt mit der Mikroprozessoreneinheit 50 verbunden ist, läßt sich - nach Ansteuerung durch die Mikroprozessoreneinheit 50 nur dann Schließen, wenn sich die Flugzeugtür 1 vollständig im verschlossenen und verriegelten Zustand befindet. Durch ein der Mikroprozessoreneinheit 50 zugeführtes Signal (lassen) läßt sich beispielsweise (die Haupt-) das Bodenventil(e) 54 nur dann schließen, wenn die Tür 1 vollständig verriegelt ist. Dann erst kann der für den Reiseflug bestimmte (menschen)verträgliche Druckaufbau in der Flugzeugkabine erfolgen. Das Öffnen der Flugzeugtür 1 bei einem auf dem Öffnungszylinder 69 noch anliegenden Restdruck, welches der Mikroprozessoreneinheit 50 ebenfalls signalisiert wird, ist ebenfalls nicht möglich. Die erste Bedieneinheit 56 befindet sich innerhalb des Flugzeuges. Mit ihr wird die handbetätigte Steuerung des offenen oder geschlossenen Zustandes der Flugzeugtür 1 und die visuelle Anzeige über diesen Zustand mittels elektrischer Betätigungs- und Anzeigeelemente, beispielsweise geeigneter Befehlsgeräte (Leuchttaster oder leuchtende Berührungssensoren) erfolgen. Weitere auf der ersten Bedieneinheit 56 angeordneten elektrischen Betätigungs- und Anzeigeelemente der vorbeschriebenen Art realisieren die handbetätigte Steuerung und visuelle Anzeige des gesicherten oder entsicherten Zustandes der Notrutsche. Die Anordnung der elektrischen Betätigungs- und Anzeigeelemente für die Flugzeugtür 1 und für die Notrutsche soll auf der ersten Bedieneinheit 56 vertikal geschehen. Unterhalb dieser Betätigungs- und Anzeigeelemente sind zwei Druckanzeigemeßgeräte auf der ersten Bedieneinheit 56 angeordnet, die die aktuellen Druckverhältnisse (voll / leer) der beiden Druckluftspeicher mittels der beiden Drucksensoren 52, 53 überwachen und visuell anzeigen. Diese Meßgeräte geben Auskunft über den aktuellen Druckzustand der (des) Druckluftspeicher(s) für den pneumatischen Öffnungszylinder 69 (zur Notöffnung) der Flugzeugtür 1 bzw. zur Betätigung der Notrutsche.

Wie bereits erwähnt - überwacht die Mikroprozessoreneinheit 50 die vorgenannten Druckverhältnisse der Druckspeicher einmal für die Notrutsche und andererseits für den pneumatischen (Not-) Öffnungszylinder 69 der Flugzeugtür 1, die dann die ersten Bedieneinheit 56 auf den Druckanzeigemeßgeräten zur Anzeige bringt. Die Mikroprozessoreneinheit 50 steuert dabei ebenfalls durch entsprechende Signalübertragung den Druckaufbau in der Flugzeugkabine, wonach dieser nur stattfinden darf, wenn die Flugzeugtür 1 vollständig geschlossen und verriegelt ist. Durch ein von ihr kontrolliertes Signal läßt (lassen) sich das (die Haupt-) Bodenventil(e) 54 nur dann schließen, wenn die Flugzeugtür 1 vollständig verriegelt ist.

Die außerhalb des Flugzeuges befindliche zweite Bedieneinheit 57 wird zur handbetätigten Steuerung des offenen oder geschlossenen Zustandes der Flugzeugtür 1 sowie der visuellen Anzeige über diesen Zustand mit den vorgenannten elektrischen Betätigungs- und Anzeigeelementen in der beschriebenen Art benutzt. Ihre Anordnung erfolgt auf der zweiten Bedieneinheit 57 sinnvollerweise horizontal.

Ergänzend wird angegeben, daß unter Beibehaltung aller bekannten Interfaces in einem Flugzeug beispielsgemäß die mechanischen Abläufe durch elektromechanische Stellmotoren realisiert sind, die durch die elektronische Steuerung angesteuerte werden.
Unter Berücksichtigung der Darstellung nach Fig. 1 sind zum Ver- bzw. Entriegeln der Flugzeugtür 1 lediglich die Funktionen:
a) Betätigen der Verriegelungshaken 9, 10 mit Hilfe des dritten und vierten Elektromotors 12, 13 und
b) Anheben bzw. Absenken der Flugzeugtür 1 mit Hilfe des zweiten Elektromotors 8 auszuführen.

Für beide Funktionen wird ein Hubspindelantrieb ausgewählt. Ein kleiner Elektromotor 8, 12, 13, 18, 19 betätigt über ein einfaches Getriebe einen Kugelgewindetrieb, wodurch die Lage der Flugzeugtür 1 verändert wird. Mit diesen genannten Mitteln ist es möglich, alle Steuerfunktionen auf die einzelnen Verriegelungselemente zu übertragen. Vorteilhaft ist auch, daß der Kugelgewindetrieb selbsthemmend bzw. mit einer Haltebremse ausgerüstet ist. Hierdurch sind die Verriegelungselemente vollständig gesichert und unabhängig von der elektrischen Stromversorgung. Fünf dieser Hubspindelantriebe sind in der Flugzeugtür 1 angeordnet. Die beiden Elektromotoren 12, 13 der ersten Elektromotorengruppe 60 betätigen jeweils einen der oberen Verriegelungshaken 9, 10 und der zweite Elektromotor 8 übernimmt das Anheben bzw. Absenken der Flugzeugtür 1.

Der fünfte und sechste Elektromotor 18, 19 der zweiten Elektromotorengruppe 61 sind für die Betätigung der Notrutschenmechanik durch deren Betätigung der Notrutschenhebel 16, 17 zuständig. Sie stellen die Schlitten der Notrutschenschiene der Notrutsche in die gesicherte bzw. entsicherte Stellung.

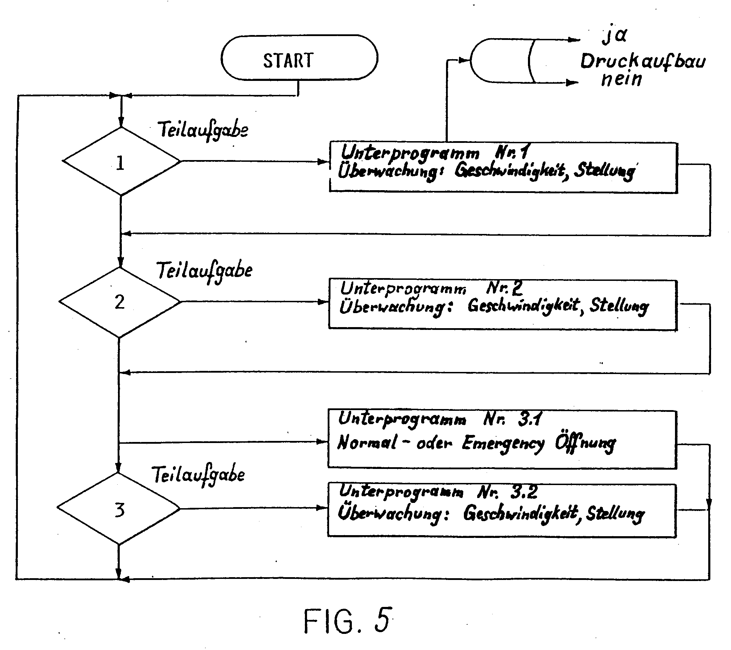

Zum Aufschwenken der Flugzeugtür 1 wird ein funktionell als Rotationsmotor ausgeführter erster Elektromotor 5 mit elektromagnetischer Kupplung eingesetzt. Dabei wird durch eine starke Getriebeuntersetzung das erforderliche Drehmoment erreicht. Die Ansteuerung der als Stellmotoren eingesetzten Elektromotoren 5, 8, 12, 13, 18, 19 durch die Mikroprozessoreneinheit 50 zur Übertragung der Bewegungsabläufe auf die einzelnen mechanischen Flugzeugtürkomponenten (Verriegelungshaken, Hubspindelantrieb, Notrutschenhebel ect.) erfolgt nach einem in Fig.5 dargestellten Programmablauf.

In diesem Programmablauf ist
- die Teilaufgabe 1: den Stellmotoren 12, 13;
- die Teilaufgabe 2: dem Stellmotor 8;
- die Teilaufgabe 3: dem Stellmotor 5
zugeordnet.

Diese Ansteuerung muß in einem logischen Zusammenhang erfolgen und überwacht werden. So muß beispielsweise der Entriegelungsvorgang vollständig abgeschlossen sein bevor das Aufschwenken der Flugzeugtür 1 einsetzt. Auch muß beim Öffnen der Flugzeugtür 1 außerhalb des Flugzeuges die erwähnte Notrutschenmechanik zuerst in die Stellung " gesichert " gebracht werden bevor die Türentriegelung beginnt. Diese Koordination (elektronische Ansteuerung und Überwachung) erledigt die Mikroprozessoreneinheit 50 in der beschriebenen Art und Weise.

In der Fig. 3 wird zum Verständnis zusätzlich der zeitliche Ablauf beim Entriegeln und Öffnen der Flugzeugtür 1, explizit beim Öffnen im Normalfall; und in der Fig. 4 explizit beim Öffnen im Notfall dargestellt.
Im Notfall (mit Notrutschenauslösung) wird das Aufstoßen der Flugzeugtür 1 eben durch den mehrfach genannten pneumatischen Öffnungszylinder 69 ausgeführt; der erste Elektromotor 5 wird in diesem Fall abgeschaltet.

Zusammengefaßt wird bemerkt, daß die zum Öffnen und Schließen der Flugzeugtür 1 erforderlichen mechanischen Bewegungen durch einzelne mit der elektronischen Steuerung ansteuerbare Elektromotoren 5, 8, 12, 13, 18, 19 (in der Ausführung als Gleich- oder Wechselstromkleinstmotoren) aufgebracht werden, wobei die unterschiedlichen Funktionen aufgrund der im elektronischen Datenspeicher der Mikroprozessoreneinheit 50 abgespeicherten Programme, die mit den Darstellungen nach den Figuren 3 bis 5 korrelieren, koordiniert und kontrolliert ablaufen. Im Anwendungsfall wird der Bedienungskomfort zugunsten des türbetreuenden Flugbegleitpersonals vorteilhaft verbessert.

### Bezugszeichen

- 1: Flugzeugtür
- 2: Strukturbauteil
- 3: Traglenker
- 4: Achse, rumpffest
- 6, 7: Kreuzgelenke
- 5, 8,: Elektromotoren
- 12, 13,: Elektromotoren
- 18, 19: Elektromotoren
- 9, 10: Verriegelungshaken
- 69: Öffnungszylinder, pneumatisch
- 14, 15: Achse, vertikal
- 16, 17: Notrutschenhebel
- 24: Spindeltrieb
- 50: Mikroprozessoreneinheit
- 51: Elektromagnet-Einheit
- 52, 53: Drucksensor
- 54: Bodenventil
- 55: Computerkontrollsystem
- 56, 57: Bedieneinheit
- 58: Gleichstromquelle
- 59: Antriebssystem, elektrisch
- 60, 61: Elektromotorengruppe
- 62: Cockpitanzeige
- 67, 68: Schaltelement; Schalter, elektrisch

## Patentansprüche

1. **Flugzeugüberwachungssystem in Kombination mit einer Flugzeugtür und mit einer elektronischen Steuerung zur Realisierung der Kinematik der Flugzeugtür**, wobei die elektronische Steuerung das Öffnen und Schließen oder das Ver- und Entriegeln der nach dem Anlageprinzip ausgebildeten Flugzeugtür (1) gewährleistet, deren ausgewählte Türkomponenten, welche die Kinematik der Flugzeugtür (1) durch deren Anheben und Absenken, Ein- und Ausschwenken, Ver- und Entriegeln realisieren, sich durch ein aus mehreren Elektromotoren (5, 8, 12, 13, 18, 19) gebildetes elektrisches Antriebssystem (59) mechanisch bewegen lassen, bei der das Antriebssystem (59), das auch zur Betätigung einer Notrutschenhebelmechanik eingesetzt ist, integraler Bestandteil der Flugzeugtür (1) ist, dessen Ansteuerung und Überwachung elektronisch erfolgt, wobei die elektronische Steuerung aus einer Mikroprozessoreneinheit (50) besteht, mit der die Ansteuerung und Überwachung des Antriebsystems (59) koordiniert wird, sowie einer Gleichstromquelle (58), die bei Ausfall der Flugzeug-Bordspannung die Notstromversorgung der Mikroprozessoreneinheit (50) übernimmt, sowie aus einer ersten und einer zweiten Bedieneinheit (56, 57) zur handbetätigenden Steuerung und visuellen Anzeige des offenen oder geschlossenen Zustandes der Flugzeugtür (1) mittels elektrischer Betätigungs- und Anzeigeelemente,
**dadurch gekennzeichnet,** daß
- ein erster und ein zweiter Drucksensor (52, 53) zur Überwachung der Druckverhältnisse eines ersten Druckluftspeichers für einen pneumatischen Öffnungszylinder (69), der die Notöffnung der Flugzeugtür (1) realisiert, und eines zweiten Druckluftspeichers, der die pneumatische Betätigung der Notrutsche gewährleistet, vorgesehen sind,
- die Mikroprozessoreneinheit (50) mit dem Antriebssystem (59), der ersten und der zweiten Bedieneinheit (56, 57), einer Elektromagnet-Einheit (51), dem ersten oder zweiten Drucksensor (52, 53), einem Bodenventil (54) und einem Computercontrollsystem (55) über Signal- oder Steuerleitungen verbunden ist,
- zwei Elektromotorengruppen (60, 61), zu denen jeweils zwei an einen Knotenpunkt geschaltene Elektromotoren (12, 13, 18, 19) gehören, und zwei einzelne Elektromotoren (5, 8) mit der Mikroprozessoreneinheit (50) verbunden sind, wobei die Zuleitung der jeweiligen Elektromotorengruppe (60, 61) auf den betreffenden Knotenpunkt geschalten ist,
- die Mikroprozessoreneinheit (50) einen elektronischen Datenspeicher mit wenigstens einem abgespeicherten und die unterschiedlichen Funktionen der Kinematik der Flugzeugtür (1) überwachenden und koordinierenden Programm aufweist, mit dem die Reihenfolge der Schritte des angesteuerten Antriebssystems (59) zur Realisierung der Kinematik der Flugzeugtür (1) durch Ein- und Ausschwenken der Flugzeugtür (1) mittels des ersten einzelnen Elektromotors (5) oder durch Anheben und Absenken der Flugzeugtür (1) mittels des zweiten einzelnen Elektromotors (8) oder durch Ver- und Entriegeln der Flugzeugtür (1) durch einen dritten und einen vierten Elektromotor (12, 13) der ersten Elektromotorengruppe (60) oder zum Betätigen der Notrutschenhebelmechanik mittels eines fünften und sechsten Elektromotors (18, 19) der zweiten Elektromotorengruppe (61) gewährleistet wird, wobei das Programm die der Mikroprozessoreneinheit (50) leitungsmäßig zugeleiteteten Informationen der beiden Drucksensoren (52, 53) über die Feststellung des Füllstatus des Druckluftspeichers berücksichtigt und in Abhängigkeit davon auf die Bedienung der Betätigungselemente der Bedieneinheiten (56, 57) anspricht und die entsprechende Ansteuerung des Antriebssystems (59) durch die handbetätigten ausgelösten Steuerfunktionen der beiden Bedieneinheiten (56, 57) nach einem Programmablauf in einem logischen Zusammenhang vornimmt,
- die erste Bedieneinheit (56) zusätzlich zur handbetätigten Steuerung und visuellen Anzeige des ge- oder entsicherten Zustandes einer Notrutsche mittels elektrischer Betätigungs- und Anzeigeelemente und zur visuellen Anzeige der bestehenden Druckverhältnisse der vorhandenen beiden Druckluftspeicher mittels Druckanzeigemeßgeräte dient,
- der Elektromagnet-Einheit (51) ein Ventil nachgeschaltet ist, welches nach Ansteuerung der Elektromagnet-Einheit (51) durch die Mikroprozessoreneinheit (50) betätigt wird, wodurch der pneumatische Öffnungszylinder (69) sich aktivieren oder entaktivieren läßt, wobei mit der Elektromagnet-Einheit (51) der vom ersten Druckluftspeicher gespeiste pneumatische Öffnungszylinder (69) für die Notöffnung der Flugzeugtür (1) bei Ansteuerung durch die Mikroprozessoreneinheit (50) aktiviert oder deaktiviert wird,
- das Bodenventil (54) sich nur nach Ansteuerung durch die Mikroprozessoreneinheit (50) schließen wenn die Flugzeugtür (1) vollständig verschlossen und verriegelt ist, weshalb erst dann ein Druckaufbau in einer Flugzeugkabine erfolgen kann,
- das Computerkontrollsystem (55), das mit Bestandteil eines zentralen elektronischen Flugzeugüberwachungssystem ist den aktuellen technischen Zustand aller an Bord befindlichen Betriebsmittel eines Flugzeuges einschließlich den geöffneten oder geschlossenen Zustand der Flugzeugtür (1) überwacht, der auf einer Cockpitanzeige (62), die mit ihr verbunden ist, visuell dargestellt wird.

2. **Flugzeugüberwachungssystem** in Kombination mit einer Flugzeugtür und mit einer elektronischen Steuerung zur Realiserung der Kinematik der Flugzeugtür nach Anspruch 1,
**dadurch gekennzeichnet,** daß die Verbindung des ersten Drucksensors (52) von der Verbindung des zweiten Drucksensors (53), der direkt mit der Mikroprozessoreneinheit (50) verbunden ist, einem Knotenpunkt abgezweigt ist, um die von den Drucksensoren (52, 53) abgegebenen Signale zu unterschieden, und daß in die dem Knotenpunkt abgezweigten Verbindungen, die die Mikroprozessoreneinheit (50) mit den beiden Drucksensoren (52; 53) verbindet, je ein Schaltelement (67; 68) angeordnet ist.

3. **Flugzeugüberwachungssystem** in Kombination mit einer Flugzeugtür und mit einer elektronischen Steuerung zur Realiserung der Kinematik der Flugzeugtür nach Anspruch 1,
**dadurch gekennzeichnet,** daß die erste Bedieneinheit (56) innerhalb und die zweite Bedieneinheit (57) außerhalb eines Flugzeuges angeordnet ist, wodurch eine getrennte Ansteuerung und Überwachung des Antriebssystems (59) zur Realisierung der Kinematik der Flugzeugtür (1) erfolgt.

4. **Flugzeugüberwachungssystem** in Kombination mit einer Flugzeugtür und mit einer elektronischen Steuerung zur Realiserung der Kinematik der Flugzeugtür nach Anspruch 1,
**dadurch gekennzeichnet,** daß die Ansteuerung der Elektromotoren (5, 8, 12, 13, 18, 19) und / oder Elektromotorengruppen (60, 61) für alle Elektromotoren (5, 8, 12, 13, 18, 19) digital erfolgt.

5. **Flugzeugüberwachungssystem** in Kombination mit einer Flugzeugtür und mit einer elektronischen Steuerung zur Realiserung der Kinematik der Flugzeugtür nach Anspruch 1,
**dadurch gekennzeichnet,** daß alle Elektromotoren (5, 8, 12, 13, 18, 19) als Gleich- und / oder Wechselstromkleinstmotoren, vorzugsweise als Schrittmotoren, ausgeführt sind, deren elektromotorischen Bewegungen mit den Maßnahmen der rechnergestützten Automation realisiert sind, wobei diese bei Verwendung eines entsprechenden Programmes gleichzeitig eine bestimmte Anzahl von Umdrehungen ausführen.

6. **Flugzeugüberwachungssystem** in Kombination mit einer Flugzeugtür und mit einer elektronischen Steuerung zur Realiserung der Kinematik der Flugzeugtür nach den Ansprüchen 1 und 4 und 5,
**dadurch gekennzeichnet,** daß das elektrische Antriebssystem (59) durch Stellmotoren realisiert ist.

## Claims

1. Aircraft monitoring system in combination with an aircraft door and having an electronic control for implementing the kinematics of the aircraft door, the electronic control ensuring the opening and closing or the locking and unlocking of the aircraft door (1) which is designed according to the contact principle and whose selected door components, which implement the kinematics of the aircraft door (1) by raising and lowering it, swivelling it in and out, and locking and unlocking it, can be moved mechanically by an electrical drive system (59) formed from a plurality of electric motors (5, 8, 12, 13, 18, 19), in which door the drive system (59), which is also used to actuate an emergency chute lever mechanism, is an integral component of the aircraft door (1), which component is activated and monitored electronically, the electronic control comprising a microprocessor unit (50) with which the activation and monitoring of the drive system (59) is coordinated, and also a direct-current source (58) which, if the aircraft onboard voltage fails, takes over the emergency supply of the microprocessor unit (50), and also of a first and a second operating unit (56, 57) for the manual control and visual indication of the open or closed state of the aircraft door (1) by means of electrical actuating and indicating elements, characterized in that
- a first and a second pressure sensor (52, 53) are provided for monitoring the pressure conditions of a first compressed-air reservoir for a pneumatic opening cylinder (69) which implements the emergency opening of the aircraft door (1) and a second compressed-air reservoir which ensures the pneumatic actuation of the emergency chute,
- the microprocessor unit (50) is connected to the drive system (59), the first and the second operating unit (56, 57), an electromagnet unit (51), the first or second pressure sensor (52, 53), a dump valve (54) and a computer monitoring system (55) via signal lines or control lines,
- two electric motor groups (60, 61) each of which includes two electric motors (12, 13, 18, 19) which are connected to a nodal point, and two individual electric motors (5, 8) are connected to the microprocessor unit (50), the feedline of the respective electric motor group (60, 61) being connected to the respective nodal point,
- the microprocessor unit (50) has an electronic data memory having at least one stored program which monitors and coordinates the various functions of the kinematics of the aircraft door (1) and with which the sequence of steps of the activated drive system (59) for implementing the kinematics of the aircraft door (1) is ensured by swivelling the aircraft door (1) in and out by means of the first individual electric motor (5) or by raising and lowering the aircraft door (1) by means of the second individual electric motor (8) or by locking and unlocking the aircraft door (1) by a third and a fourth electric motor (12, 13) of the first electric motor group (60) or for actuating the emergency chute lever mechanism by means of a fifth and sixth electric motor (18, 19) of the second electric motor group (61), the program taking account of the information, fed to the microprocessor unit (50) by wire, from the two pressure sensors (52, 53) relating to the determination of the filling status of the compressed-air reservoir and, depending thereon, responding to the operation of the actuating elements of the operating units (56, 57) and performing the appropriate activation of the drive system (59) by the manually actuated control functions initiated of the two operating units (56, 57) according to a program sequence in a logical connection,
- the first operating unit (56) additionally serving for the manually actuated control and visual indication of the secured or unsecured state of an emergency chute by means of electrical actuating elements and indicating elements and for the visual indication of the existing pressure conditions in the two compressed-air reservoirs present by means of pressure indication measuring instruments,
- connected downstream of the electromagnet unit (51) is a valve which is actuated after the electromagnet unit (51) has been activated by the microprocessor unit (50), as a result of which the pneumatic opening cylinder (69) can be activated or deactivated, the pneumatic opening cylinder (69) fed by the first compressed-air reservoir being activated or deactivated by the electromagnet unit (51) for the emergency opening of the aircraft door (1) if activated by the microprocessor unit (50),
- the dump valve (54) can be closed only after activation by the microprocessor unit (50) if the aircraft door (1) is completely closed and locked, for which reason a pressure build-up in the aircraft cabin can only then take place,
- the computer monitoring system (55), which is also a component of a central electronic aircraft monitoring system, monitors the current technical state of all operating means located on board an aircraft including the opened or closed state of the aircraft door (1), which state is displayed visually on a cockpit indicator (62) which is connected to it.

2. Aircraft monitoring system in combination with an aircraft door and with an electronic control for implementing the kinematics of the aircraft door according to Claim 1, characterized in that the connection of the first pressure sensor (52) is branched off from the connection of the second pressure sensor (53), which is directly connected to the microprocessor unit (50) at a nodal point in order to distinguish the signals delivered by the pressure sensors (52, 53) and in that one switching element (67; 68) is disposed in each case in the connections which are branched off from the nodal point and which connect the microprocessor unit (50) to the two pressure sensors (52; 53).

3. Aircraft monitoring system in combination with an aircraft door and with an electronic control for implementing the kinematics of the aircraft door according to Claim 1, characterized in that the first operating unit (56) is disposed inside an aircraft and the second operating unit (57) is disposed outside an aircraft, as a result of which a separate activation and monitoring of the drive system (59) takes place to implement the kinematics of the aircraft door (1).

4. Aircraft monitoring system in combination with an aircraft door and with an electronic control for implementing the kinematics of the aircraft door according to Claim 1, characterized in that the activation of the electric motors (5, 8, 12, 13, 18, 19) and/or electric motor groups (60, 61) takes place digitally for all the electric motors (5, 8, 12, 13, 18, 19).

5. Aircraft monitoring system in combination with an aircraft door and with an electronic control for implementing the kinematics of the aircraft door according to Claim 1, characterized in that all the electric motors (5, 8, 12, 13, 18, 19) are designed as direct-current and/or alternating-current miniature motors, preferably as stepping motors, whose electric motor movements are implemented by the measures of the computer-aided automation, said motors performing a certain number of revolutions simultaneously if a suitable program is used.

6. Aircraft monitoring system in combination with an aircraft door and with an electronic control for implementing the kinematics of the aircraft door according to Claims 1 and 4 and 5, characterized in that the electric drive system (59) is implemented by servo motors.

## Revendications

1. Système de surveillance d'avion en combinaison avec une porte d'avion et une commande électronique pour l'actionnement de la cinématique de la porte d'avion, la commande électronique assurant l'ouverture et la fermeture ou le verrouillage et le déverrouillage de la porte d'avion (1) conçue selon le principe d'application et dont les composants sélectionnés qui actionnent la cinématique de la porte d'avion (1) par leur soulèvement et leur abaissement, leur pivotement vers l'intérieur et vers l'extérieur, leur verrouillage et leur déverrouillage peuvent être déplacés mécaniquement par un système de commande électrique (59) composé de plusieurs moteurs électriques (5, 8, 12, 13, 18, 19), commande électronique dans le cas de laquelle le système de commande (59), utilisé mécaniquement également pour l'actionnement d'un levier de toboggan d'évacuation, fait partie intégrante de la porte d'avion (1) et dont la commande et la surveillance s'opèrent électroniquement, la commande électronique étant constituée d'une unité de microprocesseurs (50) grâce à laquelle la commande et la surveillance du système de commande (59) sont coordonnées, ainsi que d'une source de courant continu (58) qui, lors d'une défaillance de la tension de bord de l'avion, prend en charge l'alimentation en courant de secours de l'unité de microprocesseurs (50), ainsi que d'une première et d'une deuxième unités de contrôle (56, 57) pour la commande manuelle et l'affichage visuel de l'état ouvert ou fermé de la porte d'avion (1) au moyen d'éléments d'actionnement et d'affichage électriques,
caractérisé en ce que
- un premier et un deuxième capteurs de pression (52, 53) sont prévus pour surveiller les rapports de compression d'un premier accumulateur d'air comprimé pour un vérin pneumatique d'ouverture (69) qui actionne l'ouverture de secours de la porte d'avion (1) et d'un deuxième accumulateur d'air comprimé qui garantit l'actionnement pneumatique du toboggan d'évacuation;
- l'unité de microprocesseurs (50) est reliée par l'intermédiaire de circuits d'acheminement des signaux et de lignes pilotes au système de commande (59), à la première et à la deuxième unités de contrôle (56, 57), à une unité électromagnétique (51), au premier ou au deuxième capteur de pression (52, 53), à une soupape d'admission (54) et à un système de contrôle informatique (55);
- deux groupes de moteurs électriques (60, 61), dont font partie respectivement deux moteurs électriques (12, 13, 18, 19) reliés à un point de jonction, et deux moteurs électriques individuels (5, 8) sont connectés à l'unité de microprocesseurs (50), la ligne d'amenée de chacun des groupes de moteurs électriques (60, 61) étant reliée au point de jonction concerné;
- l'unité de microprocesseurs (50) présente un accumulateur de données électronique doté d'au moins un programme en mémoire qui surveille et coordonne les différentes fonctions de la cinématique de la porte d'avion (1), et qui garantit la succession des étapes du système de commande contrôlé (59) pour l'actionnement de la cinématique de la porte d'avion (1) par pivotement vers l'intérieur et vers l'extérieur de la porte d'avion (1) au moyen du premier moteur électrique individuel (5) ou par soulèvement et abaissement de la porte d'avion (1) au moyen du deuxième moteur électrique individuel (8) ou par verrouillage et déverrouillage de la porte d'avion (1) à l'aide d'un troisième et d'un quatrième moteurs électriques (12, 13) du premier groupe de moteurs électriques (60) ou pour l'actionnement de la mécanique de levier du toboggan d'évacuation au moyen d'un cinquième et d'un sixième moteurs électriques (18, 19) du deuxième groupe de moteurs électriques (61), le programme tenant compte des informations des deux capteurs de pression (52, 53) transmises par les circuits et lignes à l'unité de microprocesseurs (50) et concernant l'établissement du statut de chargement de l'accumulateur de pression et répondant en fonction de ces informations à la commande des éléments d'actionnement des unités de contrôle (56, 57) et procédant dans une relation logique à la commande correspondante du système de commande (59) par les fonctions de commande à déclenchement manuel des deux unités de contrôle (56, 57) suivant un déroulement de programme;
- la première unité de contrôle (56) sert en outre à la commande manuelle et à l'affichage visuel de l'état bloqué ou débloqué d'un toboggan d'évacuation au moyen d'éléments d'actionnement et d'affichage électriques et à l'affichage visuel des rapports de compression existants des deux accumulateurs d'air comprimé présents au moyen d'appareils de mesure indicateurs de pression;
- à l'unité électromagnétique (51) est raccordée une vanne qui est actionnée, après commande de l'unité électromagnétique (51), par l'unité de commande de microprocesseurs (50), le vérin d'ouverture pneumatique (69) pouvant être activé ou désactivé, grâce à l'unité électromagnétique (51) le vérin d'ouverture pneumatique (69) alimenté par le premier accumulateur d'air comprimé étant activé ou désactivé pour l'ouverture de secours de la porte d'avion (1) par commande à l'aide de l'unité de microprocesseurs (50),
- la soupape d'admission (54) ne pouvant être fermée après commande par l'unité de microprocesseurs (50) qu'une fois la porte d'avion (1) complètement fermée et verrouillée, suite à quoi il se produit alors seulement une montée de pression dans une cabine d'avion;
- le système de contrôle informatique (55) faisant partie intégrante d'un système central de surveillance d'avion électronique surveille l'état technique actuel de tous les moyens de contrôle se trouvant à bord d'un avion, y compris l'état ouvert ou fermé de la porte d'avion (1), lequel est affiché visuellement sur un écran de poste de pilotage (62) connecté au système de contrôle informatique.

2. Système de surveillance d'avion en combinaison avec une porte d'avion et une commande électronique pour l'actionnement de la cinématique de la porte d'avion suivant la revendication 1, caractérisé en ce que la liaison du premier capteur de pression (52) sort à un point de jonction de la liaison du deuxième capteur de pression (53) directement connecté à l'unité de microprocesseurs (50) afin de distinguer les signaux transmis par les capteurs de pression (52, 53) et en ce qu'aux liaisons sortant au point de jonction et reliant l'unité de microprocesseurs (50) aux deux capteurs de pression (52, 53) est adjoint dans chaque cas un élément de commutation (67, 68).

3. Système de surveillance d'avion en combinaison avec une porte d'avion et une commande électronique pour l'actionnement de la cinématique de la porte d'avion suivant la revendication 1, caractérisé en ce que la première unité de contrôle (56) est disposée à l'intérieur d'un avion et la deuxième unité de contrôle (57) à l'extérieur d'un avion, ce qui donne lieu à une commande et une surveillance séparées du système de commande (59) pour l'actionnement de la cinématique de la porte d'avion (1).

4. Système de surveillance d'avion en combinaison avec une porte d'avion et une commande électronique pour l'actionnement de la cinématique de la porte d'avion suivant la revendication 1, caractérisé en ce que la commande des moteurs électriques (5, 8, 12, 13, 18, 19) et/ou des groupes de moteurs électriques (60, 61) a lieu par technique digitale pour tous les moteurs électriques (5, 8, 12, 13, 18, 19).

5. Système de surveillance d'avion en combinaison avec une porte d'avion et une commande électronique pour l'actionnement de la cinématique de la porte d'avion suivant la revendication 1, caractérisé en ce que tous les moteurs électriques (5, 8, 12, 13, 18, 19) sont conçus comme des micromoteurs à courant continu et/ou à courant alternatif, de préférence comme des moteurs pas à pas, dont les mouvements électromoteurs sont réalisés avec les mesures de l'automatisation assistée par ordinateur, ces moteurs électriques réalisant simultanément, lors de l'utilisation d'un programme correspondant, un nombre déterminé de tours.

6. Système de surveillance d'avion en combinaison avec une porte d'avion et une commande électronique pour l'actionnement de la cinématique de la porte d'avion suivant les revendications 1, 4 et 5, caractérisé en ce que le système de commande électrique (59) est réalisé par des servomoteurs.
